# EUROPÄISCHE PATENTSCHRIFT

(11) **EP 0 373 459 B1**
(45) Veröffentlichungstag und Bekanntmachung des Hinweises auf die Patenterteilung: **15.02.1995**
(21) Anmeldenummer: 89122273.9
(22) Anmeldetag: 02.12.1989
(51) Int. Cl.: B09B 1/00

(54) **Verfahren zur Zwischenabdichtung von Deponien**
Method for the intermediate sealing of dumps
Méthode pour l'étanchement intermédiaire des dépôts de déchets

(30) Priorität: 15.12.1988 DE 3842212
(43) Veröffentlichungstag der Anmeldung: 20.06.1990
(73) Patentinhaber: BAYER AG, 51368 Leverkusen (DE)
(72) Erfinder: Fuhr, Hartmut, Dr., D-5090 Leverkusen 3 (DE); Koglin, Bernd, Dr., D-5060 Bergisch-Gladbach 2 (DE); Rink, Rolf, D-5000 Köln 80 (DE); Schäfer, Josef, Dipl.-Ing., D-5090 Leverkusen 1 (DE); Vogel, Wolfgang, Dipl.-Ing., D-5200 Siegburg (DE)

(56) Entgegenhaltungen:
- AT-B- 385 215
- DE-A- 2 224 363
- DE-A- 3 131 100
- US-A- 3 466 873
- US-A- 3 586 624
- US-A- 4 375 930
- US-A- 4 580 925

## Beschreibung

Die Erfindung betrifft ein Verfahren zur Zwischenabdichtung der jeweils oberen Abfallschichten einer in Betrieb befindlichen Deponie und zur Herstellung eines Multibarrierensystems gegen in den Deponiekörper eindringendes Sickerwasser mittels Zwischenabdeckung der Deponieschichten. Ein solches Verfahren ist durch das Dokument AT-B-385 215 bekannt.

Eine wichtige Aufgabe beim Betrieb von Deponien ist es, den Anfall von Sickerwasser möglichst gering zu halten. Zu diesem Zweck wird nach dem heutigen Stand der Technik Abfall in Lagen von beispielsweise 10 m Höhe eingebaut und mit einer Schicht van Lehm oder anderem geeigneten Material von beispielsweise 30 cm Höhe abgedeckt. Die nach dem Weiterablagern auf diesen Zwischenschichten anfallenden Sickerwässer werden aufgefangen und einer Behandlung zugeführt.

Nach dem Stand der Technik zeichnen sich heute folgende Anforderungen im Hinblick auf die Sickerwasservermeidung bzw. -minimierung bei Deponien ab:
Durch geeignete technische Maßnahmen ist der Eintrag von Niederschlag in den Deponiekörper zu minimieren.

Niederschlagswasser ist durch Überdachung oder Abdichtung von der Einbaufläche fernzuhalten.

Einbauflächen, die weder überdacht noch endabgedichtet sind, müssen zwischenabgedichtet werden Als Material für die Zwischenabdichtung eignen sich sowohl die Kunststoffolienbahn als auch bindiges Erdmaterial.

Kunststoffolien, die dachziegelartig lose oder miteinander verschweißt ausgelegt werden, sind gegen Windverwehungen zu beschweren. Sie müssen weitgehend reißfest und witterungsbeständig sein.

Die Zwischenabdichtung aus bindigem Material soll nach Einbau eine Mindestdicke von 20 cm aufweisen. Die Oberfläche ist glatt abzuwalzen und gegen Austrocknen oder Frosteinwirkungen zu schützen.

Vor Wiederinbetriebnahme der zwischenabgedichteten Einbauflächen sind die Kunststoffolien zu entfernen oder die bindigen Zwischenabdichtungen sind durch zusätzliche Maßnahmen an die zentrale Sickerwasserentsorgung anzuschließen.

Nach dem beschriebenen Stand der Technik kann durch Zwischenabdichtungen aus bindigem Material der Eintritt von Niederschlagswasser in die Deponie und folglich die Entstehung von Sickerwasser reduziert werden.

Ein Nachteil der mineralischen Zwischenabdichtung aus bindigem Material ist deren erhebliches Volumen, das dem für die Abfalleinlagerung verfügbaren Deponievolumen entzogen wird. Sowohl für Hausmüll als auch für Gewerbe-oder Industrieabfälle und für Sondermüll wird das verfügbare Deponievolumen in allen hochentwickelten Ländern ständig knapper. Diesem Gesichtspunkt kommt deshalb eine wachsende Bedeutung zu.

Mit Zwischenabdichtungen aus Kunststaffolien können das Eindringen von Niederschlagswasser in die Abfallschichten der Deponie und damit der Anfall von Sickerwasser vermieden werden. Jedoch wird durch die Vorschrift, daß die Kunststaffolien vor Wiederinbetriebnahme der zwischenabgedichteten Einbauflächen zu entfernen sind, die Nutzung der Zwischenabdeckungsfolien als bleibendes Multibarrierensystem gegen Sickerwasser ausgeschlossen. Daher durchdringt Niederschlagswasser, welches im Falle einer eventuellen Beschädigung der Zwischenabdeckung aus Kunststoff in die Oberfläche des Abfalls eintritt, den gesamten Deponiekörper bis zur Basis. Ebenso durchdringen auch jene Sickerwasseranteile, die durch Entfeuchtung höher gelegener Abfallschichten frei werden, den gesamten darunterliegenden Deponiekörper bis zur Basis. Auf diesem Weg durch den Abfallkörper muß mit weiterer Eluation der Abfälle und damit mit weiterer Aufkonzentrierung der Sickerwässer mit Schadstoffen gerechnet werden.

Der Erfindung liegt die Aufgabe zugrunde, Deponien mit wasserdichten, raumsparenden Zwischenabdichtungen mit größtmöglicher ökologischer Sicherheit zu schaffen.

Diese Aufgabe wird erfindungsgemäß dadurch gelöst, daß einzelne Deponieschichten durch Zwischenabdeckungen voneinander getrennt werden, die mit einer Dränageschicht versehen sind und daß das in der Dränageschicht angesammelte Sickerwasser zu einem Sickerwasserentsorgungssystem herausgeführt wird. Dabei handelt es sich um stationäre Zwischenabdeckungen, die einen wesentlich geringeren Raumbedarf erfordern als die bisher bekannten Zwischenabdichtungen aus bündigem Erdmaterial und die entgegen den Richtlinien nach dem Stand der Technik in der Deponie verbleiben.

Für die Zwischenabdichtung werden vorzugsweise dachziegelartig überlappende oder in Bahnen verlegte Kunststoffolien oder -platten verwendet.

Alternativ kann die Zwischenabdeckung auch in Form von Schichten aufgebracht werden, die zum überwiegenden Teil aus Abfällen wie Bauschutt, bauschuttähnlichen Mineralstoffen und Bodenaushub bestehen.

Besonders geeignete Materialien für die Dränageschicht sind Pflanzsubstrat der Kornfraktionen Sand und Kies, die zu mindestens 95 % im Größenbereich von 0,06 mm bis 40 mm liegen. Bevorzugt ist der Größenbereich von 1 mm bis 30 mm. Als Materialien eignen sich ferner rauhe und poröse Gesteine. Bevorzugt ist eine Substratmischung, deren mechanische Stabilität durch Zumischen von bis zu 5 % Bentonit erhöht wurde. Die Dicke der Pflanzsubstratschicht beträgt 20 mm bis 100 mm, bevorzugt 30 mm bis 60 mm.

Für die Zwischenabdeckung aus Kunststoffolien oder -platten kommen bevorzugt HDPE-Bahnen oder HDPE-Platten zur Anwendung, die miteinander verschweißt oder überlappend verlegt sind. Dabei liegt die Stärke des HDPE-Bahn- oder Plattenmaterials vorteilhaft im Bereich von 1 mm bis 3 mm. Durch Strukturen (z.B. Rippen oder Noppen) auf der HDPE-Oberfläche wird der dränagefähigen Materialschicht Halt geboten (Verankerungspunkte).

Eine Weiterentwicklung der Erfindung besteht darin, daß in die Zwischenabdeckung aus einer Lage von Bauschutt, bauschuttähnlichem Material oder Bodenaushub eine feinteilige aushärtende, wasserunlösliche Suspension einfiltriert wird. Besonders geeignet sind dafür Suspensionen, die Bindemittel, wie z.B. Wasserglas oder Kieselsol enthalten. Diese Maßnahme dient zur Abdichtung der Zwischenräume und zur Verfestigung der Zwischenabdeckung. Das Einfiltrieren der Dichtungssuspension in die obere Abfallschicht kann durch Unterdruck von unten oder durch Überdruck von oben erfolgen. Beim Einsaugen durch Unterdruck wird mit einer Lanze Luft aus der Abfallschicht abgesaugt. Um den Zustrom von Luft aus angrenzenden Oberflächenbereichen zu unterbinden, werden diese zweckmäßig mit einer Folie abgedeckt. Beim Einpressen durch Überdruck wird eine Druckglocke auf die abzudichtende Stelle gestülpt, die Dichtungssuspension eingefüllt und anschließend mit Überdruck in den Boden gepreßt.

Eine Zwischenabdichtung der Deponie kann in vorteilhafter Weise dadurch erfolgen, daß eine fließfähige, hochkonzentrierte Suspension von Feinanteil von Bauschutt, bauschuttähnlichen Mineralstoffen und Bodenaushub mittels einer Flachdüse auf die Abfalloberfläche gepumpt wird. Vorzugsweise werden der Suspension Bindemittel in Form von Kieselsol oder Wasserglas zugesetzt.

Ein alternatives Verfahren zur Herstellung der Zwischenabdichtung besteht darin, daß mit hohen Drücken von 10 bis 300 bar, bevorzugt von 30 bar bis 150 bar, Platten oder Blöcke aus mit Bindemitteln versetzten Abfällen aus Bauschutt, bauschuttähnlichen Mineralstoffen und Bodenaushub gepreßt werden, die dann bausteinartig oder dachziegelartig verlegt werden. Als Bindemittel sind wiederum bevorzugt Wasserglas, Kieselsol oder auch Zement geeignet.

Die zwischen den Platten oder Blöcken verbleibenden Fugen werden vorteilhaft mit einer aushärtenden, wasserunlöslichen Suspension geschlossen. Dabei geht man im Prinzip in der gleichen Weise vor wie beim Einfiltrieren einer aushärtenden, wasserunlöslichen Suspension in die Zwischenabdeckung (siehe oben).

Beim Pressen kann die nach oben weisende Oberfläche der oberen Platten oder Blöcke strukturiert werden, um dem aufzugebenden dränagefähigen Material Halt zu verschaffen.

Vor Wiederinbetriebnahme der zwischenabgedichteten Einbauflächen werden die Zwischenabdichtungs- und Dränageschichten an das Sickerwasserentsorgungssystem angeschlossen.

Das beschriebene Verfahren hat mit allen beschriebenen Varianten gegenüber dem Stand der Technik den Vorteil, daß eine bleibende Zwischenabdichtung ohne Verlust an Deponievolumen verwirklicht wird.

Entgegen dem bekannten Stand der Technik wurde gefunden, daß auch Kunststoffzwischenabdichtungen mit einem Dränagesystem verbunden und so ausgeführt werden können, daß sie vor Wiederinbetriebnahme der zwischenabgedichteten Einbauflächen nicht entfernt werden müssen, sondern an das Sickerwasserentsorgungssystem angeschlossen werden können.

Darüber hinaus wurde gefunden, daß Abfälle wie Bauschutt, bauschuttähnliche Mineralstoffe oder Bodenaushub selbst einen wesentlichen Bestandteil der Zwischenabdichtung ausmachen können. Somit wird das Verwertungsgebot für Abfälle auf unerwartete Weise erfüllt.

Das Verfahren kann bei allen Deponien für Sonderabfälle, industrielle oder gewerbliche Abfälle oder Hausmüll genutzt werden. Es spart im Vergleich zum Stand der Technik wertvolle Anteile des Deponievolumens ein und reduziert die Menge des anfallenden Sickerwassers und die Menge an eluierten Schadstoffen erheblich.

Im folgenden wird die Erfindung anhand von Ausführungsbeispielen und Zeichnungen näher erläutert. Es zeigen:
- Fig. 1: schematisch den Aufbau einer nach dem erfindungsgemäßen Verfahren errichteten Deponie mit Zwischenabdichtung der Abfallschichten;
- Fig. 2: das Einbringen einer Dichtungssuspension in eine körnige Abfallschicht mittels Unterdruck;
- Fig. 3: das Einbringen einer Dichtungssuspension in die Abfallschicht mittels Überdruck;
- Fig. 4a bis Fig. 4c: Querschnitte durch eine Abfallschicht vor, während und nach der Behandlung mit dem Verfahren gemäß Fig. 2 bis 3.
- Fig. 5: die Herstellung einer Zwischenabdeckung durch Aufgießen einer fließfähigen und später erstarrenden Schicht und
- Fig. 6: eine Zwischenabdichtung auf der Basis von gepreßten Abfallblöcken bzw. -platten.

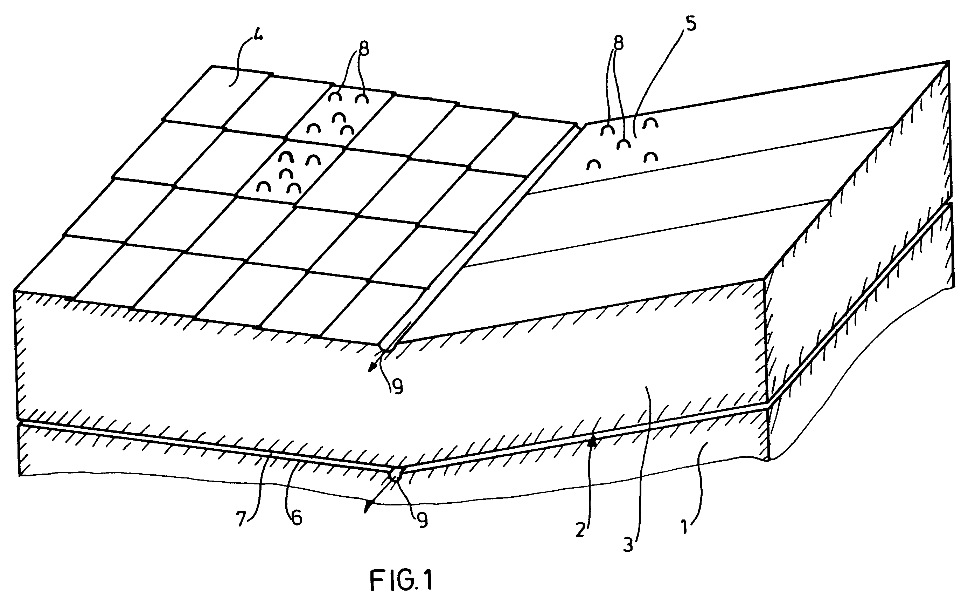

Die in Figur 1 dargestellte Deponie besteht aus einer unteren Abfallage 1, die mit einer Zwischenabdichtung 2 abgedeckt ist und einer darauffolgenden oberen Abfalllage 3, deren Oberfläche mit dachziegelartig überlappend verlegten Kunststoffplatten 4 oder verschweißten Kunststoffbahnen 5 abgedeckt ist. Die Abfallagen 1 und 3 haben z.B. eine Stärke von 10 m und bestehen z.B. aus Sonderabfällen der Deponieklasse 5. Die Zwischenabdichtung 2 besteht aus der Kombination einer Kunststoffabdeckung 6 mit einer darüberliegenden Dränageschicht 7. Die Kunststoffabdeckung 6 der Zwischenabdichtung 2 ist in der gleichen Weise aufgebaut wie die aus Kunststoffplatten 4 bzw. Kunststoffbahnen 5 bestehende obere, noch nicht mit weiteren Abfällen belegte Zwischenabdeckung. Als Material wird Hochdruckpolyethylen (HDPE) verwendet. Die Stärke der Bahnen bzw. Platten beträgt z.B. 2 mm. Zur Erhöhung der Oberflächenhaftreibung werden in die Kunststoffplatten 4 bzw. Kunststoffbahnen 5 Noppen 8 eingeprägt.

Als Dränageschicht 7 dient eine Pflanzsubstratschicht der Kornfraktionen Sand und Kies mit einer überwiegenden Korngröße im Bereich von 1 mm bis 30 mm. Die Dicke der Pflanzsubstratschicht beträgt z.B. 40 mm. Die mechanische Stabilität kann durch Zumischen von bis zu 5 % Bentonit erhöht werden. Als Material für die Pflanzsubstratschicht 7 sind ferner rauhe und poröse Gesteine im gleichen Korngrößenbereich geeignet. Eine derartige Dränageschicht wird jeweils auf die obere, noch nicht mit Abfällen belegte Zwischenabdichtung aus Kunststoffplatten 4 bzw. Kunststoffbahnen 5 aufgebracht. Durch die Strukturen 8 auf der Oberfläche der Kunststoffabdeckung 6 wird der Dränageschicht 7 Halt geboten. Bei einem V-förmigen oder trichterförmigen Aufbau der Deponie sammelt sich das Regen- bzw. Sickerwasser an der tiefsten Stelle 9 der Zwischenabdichtung 2 bzw. der Oberflächenabdeckung 4, 5 und kann einem Sickerwasser- bzw. Regenwasserentsorgungssystem zugeführt werden. Nach den bisherigen Richtlinien mußte die Kunststoffabdeckung 4, 5 vor der Wiederinbetriebnahme der Deponie entfernt werden, so daß sie nicht die Funktion einer Zwischenabdichtung übernehmen konnte.

Anstelle von Kunststoffplatten oder -bahnen können für die Zwischenabdichtung auch mineralische Schichten verwendet werden, die durch Einfiltrieren von feinteiligen aushärtbaren, wasserunlöslichen Suspensionen hergestellt werden. Eine solche mineralische Dichtungsschicht erhält man z.B. wenn in eine Lage von feinem Anteil aufgearbeitetem Bauschutt oder bauschuttähnlichem mineralischen Material oder Bodenaushub eine feinteilige, mit Bindemitteln, wie Wasserglas versetzte Tonsuspension einfiltriert wird. Besonders bewährt hat sich Kieselsol als wasserunlösliches Binde-, Abdichtungs- und Verfestigungsmittel.

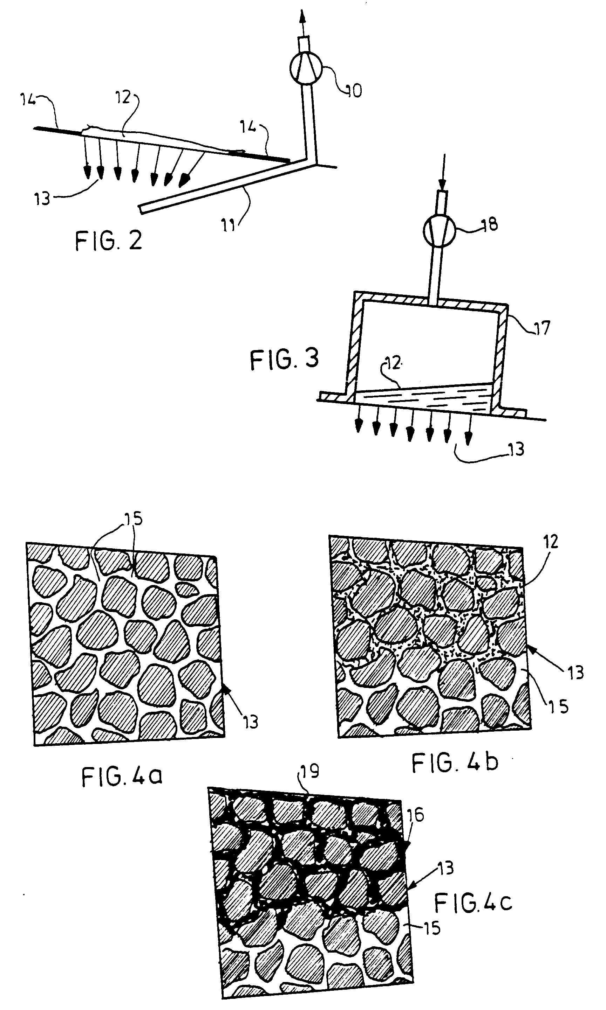

Das Einfiltrieren kann gemäß Figur 2 mit Hilfe einer an eine Vakuumpumpe 10 angeschlossenen Unterdrucklanze 11 erfolgen. Die Dichtungssuspension 12 wird dann auf die Oberfläche der z.B. auf die obere Abfallage 3 aufgebrachten vorerwähnten porösen mineralischen Dichtungsschicht 13 aufgegossen und aufgrund des Unterdrucks in die Zwischenräume 14 der mineralischen porösen Abfallschicht 13 gesaugt. Um den Zustrom von Luft aus den nicht mit der Dichtungssuspension benetzten Bereichen zu unterbinden, werden diese zweckmäßig mit einer Schutzfolie 14 vorübergehend abgedeckt.

Figur 4a zeigt die poröse Abfallschicht 13 vor der Behandlung mit den Zwischenräumen 15, Figur 4b zeigt diese Abfallschicht während der Behandlung, bei der die oberen Zwischenräume mit der zunächst noch fließfähigen Dichtungssuspension 12 aufgefüllt werden, die dann zur festen mineralischen Dichtungsschicht 16 erstarrt (Fig. 4c).

Alternativ kann die Dichtungssuspension 12 nach Figur 3 auch mit Hilfe einer aufgestülpten Druckglocke 17 mit einem geschlossenen Kompressor 18 in die mineralische Abfallschicht 13 eingepreßt werden. Die Oberfläche der mineralischen Zwischenabdichtung 13 kann zusätzlich mit einer inerten Schicht 19 von z.B. 2 mm Dicke aus Wasserglas, Kieselsol oder anderen Bindemitteln versiegelt werden (siehe Figur 4c).

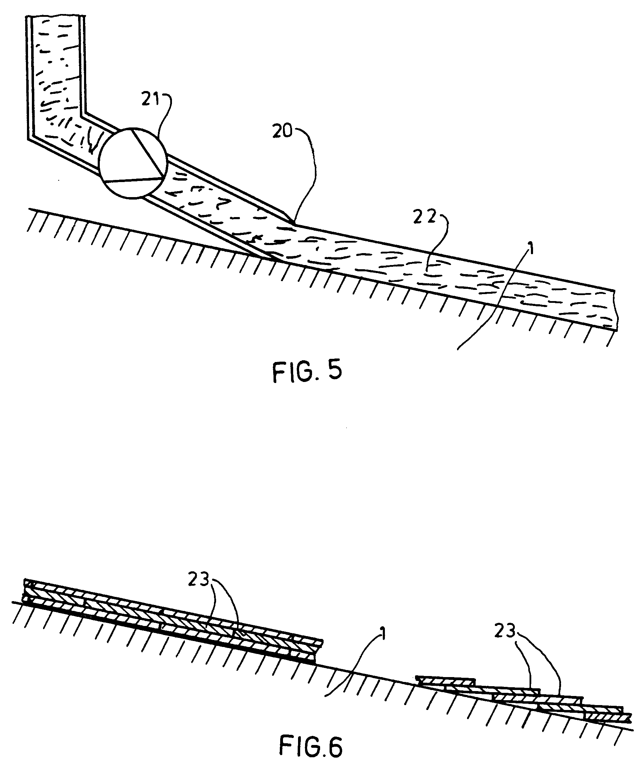

Eine weitere Methode zur Herstellung einer mineralischen Zwischenabdichtung 16 besteht nach Figur 5 darin, daß eine fließfähige, hochkonzentrierte Suspension von Feinanteilen der Materialien Bauschutt, bauschuttähnlichen Mineralstoffen oder Bodenaushub, die mit Bindemitteln versetzt ist, mittels einer Flachdüse 20 und Dickstoffpumpe 21 auf die Abfallage 1 gepumpt wird. Die so aufgetragene, fließfähige Schicht erstarrt dann zu der fertigen Dichtungsschicht, die die gleiche Funktion hat wie die Kunststoffabdeckung der Deponie nach Figur 1 oder die mineralische, mit Bindemittel getränkte Dichtungsschicht 16 nach Figur 4c. Die Oberfläche der aufgegossenen Dichtungsschicht 22 kann wiederum mit einem inerten Substrat versiegelt werden, das anschließend in ähnlicher Weise wie die Oberflächen gemäß Figur 1 mit Strukturen versehen wird, um die Haftreibung der darauffolgenden Dränageschicht 7 verbessern.

Eine weitere Variante zur Herstellung der Zwischenabdichtung beruht auf der Verwendung von mit hohem Druck gepreßten und mittels Bindemittel verfestigten Platten oder Blöcken aus feinteiligem Bauschutt, bauschuttähnlichen Mineralstoffen und/oder Bodenaushub. Solche Platten bzw. Blöcke werden zweckmäßig mittels hydraulischer Pressen mit Drücken von 10 bar bis 300 bar hergestellt. Gemäß Figur 6 werden diese Blöcke 23 dann bausteinartig (linke Hälfte der Figur) oder dachziegelartig (rechte Hälfte der Figur) auf der Oberfläche der Abfallage 1 verlegt. Zusätzlich können die Fugen zwischen den Platten oder Blöcken 23 durch Einfiltrieren einer feinteiligen, aushärtenden Suspension gemäß dem anhand von Figur 2 und 3 beschriebenen Verfahren abgedichtet werden.

Bei allen beschriebenen Varianten der Zwischenabdichtung (Kunststoffabdeckung 6 nach Figur 1, gefüllte mineralische Dichtung 13 nach Figur 2 bis Figur 4 und Plattenabdichtung 23 nach Figur 6) wird die Zwischenabdichtung mit einer Dränageschicht 7 beschichtet, bevor weitere Abfallagen deponiert werden. Das in einer Zwischenabdichtung anfallende Sickerwasser wird jeweils über eine Leitung zu einem Entsorgungssystem abgeführt. Auf diese Weise wird ein Multibarrierensystem gegen in den Deponiekörper eindringendes Sickerwasser mit geringem Volumenbedarf geschaffen, das gleichzeitig eine Überwachung und Entsorgung von in die Deponie eindringendem Sickerwasser ermöglicht und damit eine hohe ökologische Sicherheit gewährleistet.

## Patentansprüche

1. Verfahren zur Zwischenabdichtung einer in Betrieb befindlichen Deponie und zur Herstellung eines aus Zwischenabdeckungen bestehenden Multibarrierensystems, bei dem die Zwischenabdeckung mit einer Drainageschicht versehen wird, und das in der Drainageschicht gesammelte Sickerwasser herausgeführt wird, dadurch gekennzeichnet, daß für die Drainageschicht aus Sand und Kies oder aus rauhen und porösen Gesteinen bestehende Kornfraktionen verwendet werden, die zu mindestens 95 % im Größenbereich von 0,06 mm bis 40 mm, vorzugsweise im Bereich von 1 mm bis 20 mm liegen und mit einer Schichthöhe von 20 mm bis 100 mm jeweils auf die obere, noch nicht mit Abfällen belegte Zwischenabdeckung aufgebracht werden.

2. Verfahren nach Anspruch 1, dadurch gekennzeichnet, daß die Drainageschichten mit einer Höhe von 30 mm bis 60 mm angelegt werden.

3. Verfahren nach Anspruch 1-2, dadurch gekennzeichnet, daß als Zwischenabdeckung dachziegelartig überlappende oder in Bahnen verlegte Kunststoffolien oder -platten verwendet werden.

4. Verfahren nach Anspruch 1-2, dadurch gekennzeichnet, daß als Zwischenabdeckung Schichten aufgebracht werden, die zum überwiegenden Teil aus Abfällen wie Bauschutt, bauschuttähnlichen Mineralstoffen und Bodenaushub bestehen.

5. Verfahren nach Ansprüchen 1 bis 4, dadurch gekennzeichnet, daß die Zwischenabdichtungsoberfläche strukturiert wird, um der dränagefähigen Substratschicht Halt zu bieten.

6. Verfahren nach Ansprüchen 3 bis 5, dadurch gekennzeichnet, daß als Kunststoff HDPE-Platten oder -Bahnen mit einer Dicke von 1 bis 3 mm verwendet werden.

7. Verfahren nach Ansprüchen 4 bis 5, dadurch gekennzeichnet, daß in die Zwischenabdeckung aus einer Lage von Bauschutt, bauschuttähnlichem mineralischen Material oder Bodenaushub eine feinteilige, aushärtende, wasserunlösliche Suspension einfiltriert wird.

8. Verfahren nach Anspruch 7, dadurch gekennzeichnet, daß die Suspension mittels einer in die Abfallschicht geführten Vakuumlanze mit Unterdruck in die Abfallschicht eingesaugt wird.

9. Verfahren nach Anspruch 7, dadurch gekennzeichnet, daß die Suspension mittels einer auf die Abfallschicht aufgesetzten Glocke mit Überdruck in die Abfallschicht gepreßt wird.

10. Verfahren nach Ansprüchen 4 bis 5, dadurch gekennzeichnet, daß die Zwischenabdichtung durch Aufgießen einer zunächst fließfähigen und dann erstarrenden Schicht von Abfällen wie Bauschutt, bauschuttähnlichen Mineralstoffen oder Bodenaushub und Bindemitteln hergestellt wird.

11. Verfahren nach Anspruch 10, dadurch gekennzeichnet, daß die fließfähige Suspension mit einer Flachdüse auf den Abfall gepumpt wird.

12. Verfahren nach Ansprüchen 4 bis 5, dadurch gekennzeichnet, daß die Zwischenabdichtung durch Einbau von mit hohen Drücken von 10 bis 300 bar, bevorzugt von 50 bis 200 bar, gepreßten Platten oder Blöcken aus Abfällen wie Bauschutt, bauschuttähnlichen Mineralstoffen und Bodenaushub, die mit Bindemittel wie Wasserglas, Kieselsol oder Zement versetzt sein können, auf der Abfallschicht bausteinartig oder dachziegelartig verlegt werden.

13. Verfahren nach Anspruch 12, dadurch gekennzeichnet, daß die Fugen zwischen den Platten oder Blöcken mit feinteiliger Suspension zufiltriert werden.

## Claims

1. Process for the intermediate sealing of an operating landfill and for the production of a multi-barrier system which consists of intermediate coverings and in which the intermediate covering is provided with a drainage course, and the seeping water collected in the drainage course is evacuated, characterized in that, for the drainage course, grain fractions are used which consist of sand and gravel or of rough and porous stones and which lie at least 95% within the range of sizes from 0.06 mm to 40 mm, preferably in the range from 1 mm to 20 mm and, to a course height of 20 mm to 100 mm, are applied respectively to the upper intermediate covering which is not yet lined with waste.

2. Process according to Claim 1, characterized in that the drainage courses are applied to a height of 30 mm to 60 mm.

3. Process according to Claim 1-2, characterized in that, as intermediate covering, plastics films or plates are used which overlap in the style of roof tiles or are laid in strips.

4. Process according to Claim 1-2, characterized in that, as intermediate covering, courses are applied which predominantly consist of waste such as rubble, rubble-like mineral substances and spoil.

5. Process according to Claims 1 to 4, characterized in that the intermediate sealing surface is structured to offer support to the drainable substrate course.

6. Process according to Claims 3 to 5, characterized in that, as plastic, HDPE-plates or strips of 1 to 3 mm thickness are used.

7. Process according to Claims 4 to 5, characterized in that a fine-particled, hardening, water-insoluble suspension is filtered into the intermediate covering of a layer of rubble, rubble-like mineral material or spoil.

8. Process according to Claim 7, characterized in that the suspension is sucked with underpressure into the waste course by means of a vacuum lance which is guided into the waste course.

9. Process according to Claim 7, characterized in that the suspension is pressed with overpressure into the waste course by means of a bell placed on the waste course.

10. Process according to Claims 4 to 5, characterized in that the intermediate sealing is produced by pouring on an initially free-flowing and then solidifying course of waste, such as rubble, rubble-like mineral substances or spoil and binding agents.

11. Process according to Claim 10, characterized in that the free-flowing suspension is pumped onto the waste using a flat nozzle.

12. Process according to Claims 4 to 5, characterized in that the intermediate sealing is laid on the waste course in the manner of bricks or roof tiles by the installation of plates or blocks of waste such as rubble, rubble-like mineral substances and spoil, which are pressed at high pressures of 10 to 300 bar, preferably 50 to 200 bar, and to which can be added binding agents such as water glass, silica sol or cement.

13. Process according to Claim 12, characterized in that the joints between the plates or blocks are supplied, by filtering, with fine-particled suspension.

## Revendications

1. Procédé pour l'étanchement intermédiaire d'un dépôt de déchets en service et pour la préparation d'un système multibarrière constitué de couvertures intermédiaires, pour lequel la couverture intermédiaire est munie d'une couche de drainage et l'eau d'infiltration collectée dans la couche de drainage est extraite, caractérisé en ce qu'on utilise pour la couche de drainage des fractions granulométriques constituées de sable et de gravier ou de roches dures et poreuses qui se trouvent au moins pour 95 % dans un domaine de dimensions de 0,06 mm à 40 mm, de préférence dans un domaine de 1 mm à 20 mm et sont aménées avec une hauteur de couche de 20 mm à 100 mm à chaque fois sur la couverture intermédiaire supérieure qui n'est pas encore garnie de déchets.

2. Procédé selon la revendication 1, caractérisé en ce que les couches de drainage sont mises avec une hauteur de 30 mm à 60 mm.

3. Procédé selon les revendications 1 et 2, caractérisé en ce qu'on utilise comme couverture intermédiaire des plaques ou des feuilles de matière plastique se chevauchant à la manière de tuiles ou posées en pans.

4. Procédé selon les revendications 1 et 2, caractérisé en ce qu'on amène comme couverture intermédiaire des couches, qui sont constituées en partie prédominante de déchets comme des décombres, des matières minérales semblables à des décombres et des déblais de terre.

5. Procédé selon les revendications 1 à 4, caractérisé en ce que la surface de l'étanchement intermédiaire est structurée pour offrir un appui à la couche de substrat capable de drainage.

6. Procédé selon les revendications 3 à 5, caractérisé en ce qu'on utilise comme matière plastique des pans ou des plaques HDPE ayant une épaisseur de 1 à 3 mm.

7. Procédé selon les revendications 4 à 5, caractérisé en ce qu'on laisse infiltrer dans la couverture intermédiaire constituée d'une couche de décombres, de matériau minéral semblable à des décombres ou de déblais de terre une suspension en fines particules, non soluble dans l'eau, durcissante.

8. Procédé selon la revendication 7, caractérisé en ce que la suspension est aspirée dans la couche de déchets avec une sous-pression à l'aide d'une lance à vide introduite dans la couche de déchets.

9. Procédé selon la revendication 7, caractérisé en ce que la suspension est comprimée dans la couche de déchets avec une surpression à l'aide d'une cloche posée sur la couche de déchets.

10. Procédé selon les revendications 4 à 5, caractérisé en ce qu'on prépare l'étanchement intermédiaire en répandant une couche coulante dans un premier temps et se solidifiant ensuite de déchets comme des décombres, des matières minérales semblables à des décombres ou des déblais de terre et d'agents liants.

11. Procédé selon la revendication 10, caractérisé en ce qu'on pompe la suspension coulante avec une buse plate sur les déchets.

12. Procédé selon les revendications 4 à 5, caractérisé en ce qu'on pose l'étanchement intermédiaire sur la couche de déchets à la manière de pierres de construction ou de tuiles par montage de plaques ou de blocs comprimés avec des pressions élevées de 10 à 300 bars, de préférence de 50 à 200 bars, constitués de déchets comme des décombres, des matières minérales semblables à des décombres et des déblais de terre, qui peuvent être additionnés d'un agent liant comme du verre soluble, du sol de silice ou du ciment.

13. Procédé selon la revendication 12, caractérisé en ce qu'on laisse filtrer une suspension en fines particules dans les joints entre les plaques ou les blocs.
